# EUROPEAN PATENT APPLICATION

(11) **EP 2 336 947 A1**
(43) Date of publication of application: **22.06.2011**
(21) Application number: 09306229.7
(22) Date of filing: 15.12.2009
(51) Int. Cl.: G06K 9/00

(54) **Personal identification pattern**

(71) Applicant: Gemalto SA, 92190 Meudon (FR)
(72) Inventor: Batara, Akram, 92190, Meudon (FR)

(57) **Abstract**

The invention relates to an electronic device (MP) comprising a sensitive surface (TS) usable to input a two dimensional shape. The electronic device (MP) is set to record a shape, and to authenticate a user if the user inputs the same shape as the recorded shape. The invention also relates to a method to authenticate a user of an electronic device (MP).

## Description

The invention relates to electronic devices which need to authenticate users, and which are equipped with a sensitive surface usable to input a two dimensional shape.

As known in the art, it is possible to authenticate a user to an electronic device by asking the user to input secret data such as a password, a PIN code or a passphrase. Such secret data is typically input through a keyboard. The keyboard can be mechanical (physical keys being available), or virtual (e.g. a virtual keyboard can be displayed on a screen and the user may click the virtual keys of his choice with a pointing device such as a mouse, a touchpad, a trackball, etc.). The secret can also be input with a stylus on a touch screen, with a character recognition technique. In this case, the input of the user is analyzed in order to be converted into a character. Once converted, the input character is compared with the corresponding character of the secret data. If all characters match, the user is authenticated.

One problem with this known technique is that the number of possible characters is limited (and is often limited even more by mandating the use of alphanumerical characters only), and that in order to remain secure, the secret data must embed a high number of characters, which may be hard to remember. There is therefore a risk. The user may forget the secret data in which case he can no longer authenticate and use his electronic device. The user may also decide to write down (e.g. on a post-it) or record (e.g. in a text file, in an easy to remember and easily accessible location) the secret data, which can become available to a hacker.

It is therefore an aim of the invention to propose an electronic device with a more appropriate authentication technique, as well as a corresponding authentication method.

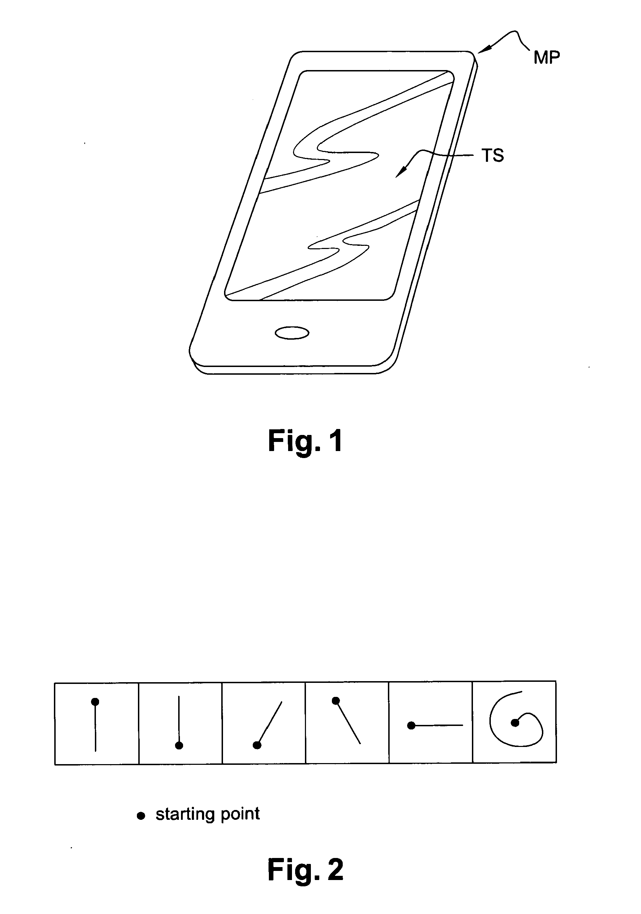

The invention and its advantages will be explained more in details in the following specification referring to the appended drawing, in which Figure 1 represents a mobile phone MP equipped with a touchscreen TS, and in which Figure 2 represents an example of series of patterns used to authenticate a user according to a method of the invention, wherein each pattern corresponds to a very simple shape (the patterns are curves representing segments and spirals).

An electronic device according to the invention comprises a sensitive surface usable to input a two dimensional shape. The electronic device is set to record a shape, and to authenticate a user if the user inputs the same shape as the recorded shape. The electronic device can be any computing system (e.g. public kiosk, personal computer, POS - Point Of Sales terminal - etc.), and in particular a portable computing system such as a laptop computer, a PDA (personal digital assistant), or a mobile phone.

The sensitive surface can rely on any well known technologies, bearing in mind that certain technologies are not available for very compact device such as mobile phones. For example, the sensitive surface can rely on the following technologies, described in http://en.wikipedia.org/wiki/Touch Screen:
- A resistive panel. Such panel is typically composed of several layers, comprising two thin electrically conductive layers (which can be for example metallic) separated by an isolating fluid (such as air), or even by vacuum. When an object exerts pressure on a point of outer surface of the resistive panel, the two conductive layers become connected. This may be detected (e.g. an electrical current may be detected) and the point which was pressed can be identified accordingly.
- Surface acoustic wave (SAW). Ultrasonic waves may be sent through the sensitive surface. When the sensitive surface is touched, this causes part of the wave to be absorbed. By analyzing the ultrasonic waves it is possible to identify that a point was touched, and which point was touched.
- Capacitive sensing. A capacitive panel comprises an insulator such as glass, coated with a transparent conductor such as indium tin oxide (ITO). The human body being a conductor, touching the sensitive surface results in a distortion of the local electrostatic field, measurable as a change in capacitance.
- Surface capacitance. Only one side of an insulator is coated with a conductive layer. A small voltage is applied to the conductive layer, resulting in a uniform electrostatic field. When a conductor, such as a human finger, touches the uncoated side, a capacitor is dynamically formed. A sensor controller can determine the location of the touch indirectly from the change in the capacitance as measured from the four corners of the panel. This technology has a limited resolution.
- Projected capacitance. Projected Capacitive Touch (PCT) technology is a fairly accurate capacitive technology. An XY array is formed either by etching a single layer to form a grid pattern of electrodes, or by etching two separate, perpendicular layers of conductive material with parallel lines or tracks to form the grid (comparable to the pixel grid found in many LCD displays). Applying voltage to the array creates a grid of capacitors. Bringing a finger or conductive stylus close to the surface changes the local electrostatic field. The capacitance change at every individual point on the grid can be measured to accurately determine the touch location. The use of a grid typically permits a higher resolution than resistive technology and also allows multi-touch operation. The greater resolution of PCT allows operation without direct contact, so the conducting layers can be coated with further protective insulating layers, and operate even under screen protectors, or behind weather and vandal-proof glass. PCT is used in a wide range of applications including point of sale systems, smartphones, and public information kiosks.
- Infrared. Conventional optical-touch systems use an array of infrared (IR) light-emitting diodes (LEDs) on two adjacent bezel edges of a sensitive surface, with photosensors placed on the two opposite bezel edges to analyze the system and determine a touch event. The LED and photosensor pairs create a grid of light beams across the sensitive surface. An object (such as a finger or pen) that touches the sensitive surface interrupts the light beams, causing a measured decrease in light at the corresponding photosensors. The measured photosensor outputs can be used to locate a touch-point coordinate.
- Strain gauge. In a strain gauge configuration, also called force panel technology, the sensitive surface is spring-mounted on its four corners and strain gauges are used to determine deflection when the sensitive surface is touched. It can also measure the Z-axis and the force of a person's touch. Such sensitive surfaces are typically used in exposed public systems such as ticket machines due to their resistance to vandalism.
- Optical imaging. Two or more image sensors are placed around the edges (mostly the corners) of the sensitive surface. Infrared backlights are placed in the camera's field of view on the other sides of the sensitive surface. A touch shows up as a shadow and each pair of cameras can then be triangulated to locate the touch or even measure the size of the touching object.
- Dispersive signal technology. This system uses sensors to detect the mechanical energy in a glass panel that occurs due to a touch. Complex algorithms then interpret this information and provide the actual location of the touch. The technology claims to be unaffected by dust and other outside elements, including scratches. Since there is no need for additional elements on the sensitive surface, it also claims to provide excellent optical clarity. Also, since mechanical vibrations are used to detect a touch event, any object can be used to generate these events, including fingers and stylus. A downside is that after the initial touch the system cannot detect a motionless finger.
- Acoustic pulse recognition. This system uses more than two piezoelectric transducers located at some positions of the sensitive surface to turn the mechanical energy of a touch (vibration) into an electronic signal. The sensitive surface embeds hardware that uses an algorithm to determine the location of the touch based on the transducer signals. This process is similar to triangulation used in GPS. The sensitive surface can be made of ordinary glass, giving it good durability and optical clarity. It is usually able to function with scratches and dust on the sensitive surface with good accuracy. The technology is well suited to displays that are physically larger. As with the Dispersive Signal Technology system, after the initial touch, a motionless finger cannot be detected. However, for the same reason, the touch recognition is not disrupted by any resting objects.

The shape (which does not necessarily have to be two dimensional) can be defined freely by the user, therefore there are many possibilities, a lot more than with a character. The shape can also be imposed by a third party (as with PIN codes, which can be predefined, for example a bank card typically comes with a PIN code which is defined by the issuing bank rather than by the user). The secret data constituted by the shape is safer, since it is much harder to guess. A usual character is coded according to the ASCII standard, on 7 bits, and therefore there are typically only 128 possible characters at most, i.e. 128 possible characters to try for a hacker. With a two dimensional shape, the number of possibilities is very high. For example, let's consider a sensitive surface with a resolution of 128*128 points, and able to measure each point with a resolution of 8 bits (for example the strength of the contact of a stylus on the selected point of the sensitive surface can be measured between 0 for no contact and 255 for very strong contact). In this example, each shape that is recorded by the sensitive surface therefore corresponds to a set of points taken from 128*128*8 = 131072 = 2^17 possible points. If the shape corresponds to a set of approximately 128 points, then considering that the order of the points matters, there are approximately 2^17*128! i.e. approximately 5*10^220 possibilities, which is huge. Of course, not all shapes are practical (some are inconvenient to input), and shapes which are close one to the other (e.g. two shapes which vary only by a small number of points, or which points are very close) should be considered a single shape, so overall there are less possibilities, but the number is still much higher than with a single character.

During the shape verification, the electronic device shall preferably not perform a bitwise comparison of the shapes, because it is in general almost impossible to input exactly the same shape twice. For example, if the sensitive surface is a touch screen used with a stylus, it is almost impossible to always put the stylus on exactly the same location, and to press with exactly the same strength, assuming that the strength is measured (in simple embodiments, a binary measurement is carried out, according to which a given point is either pressed or not pressed, but the pressure is not measured accurately, it's either 0 or 1).

So preferably, a first correction is preferably applied, according to which any translation of the shape is ignored (i.e. if the shape is input lower, higher, more on the left or more on the right than the recorded shape, this makes no difference). According to a second possible correction, slight variations (e.g. within +/- 10%) in the strength of each point of the shape are ignored. According to a third possible correction, slight variations in the location of each point of the shape are ignored. So if some of the points of the shape are slight displaced, it makes no difference (if the third correction is applied). According to a fourth possible correction, a slight homothecy (a transformation of space which dilates distances with respect to a fixed point) is ignored, so for example if the shape is within 10% bigger or smaller than the recorded shape, it can be ignored. According to a fifth possible correction, a slight rotation (e.g. within +/- 15° i.e. +/- pi/12 radians) can be ignored.

According to a preferred embodiment, the electronic device is set to record several shapes, and to authenticate a user if the user inputs the same shapes as the recorded shapes. This is advantageous as this multiplies the number of combinations, and makes it even harder for a hacker to guess the secret data. In addition, the more shapes are used, the simpler the shapes may be. If very few shapes are used (or even if only one shape is used), a preferred embodiment of the electronic device may comprise means to verify that the shapes are not too common (e.g. do not belong to a database of shapes used very often).

According to a preferred embodiment of the above multiple shapes embodiment, the electronic device is set to authenticate the user only if he inputs the shapes in the same order as the order in which the shapes are recorded. This again multiplies the number of combinations and makes it harder to guess the combination, even if each one of the shapes defined by the user has been guessed.

According to a preferred embodiment, the shapes are simple geometric shapes, for example lines, triangles, rectangles or circles, which may of course vary in size, orientation, "thickness" (strength with which they are input), etc.

According to a preferred embodiment the sensitive surface is a touchpad (such as the touchpad commonly available on most laptop computers) or a touchscreen (such as touchscreens commonly available on many mobile phones or PDAs).

According to a preferred embodiment, the sensitive surface is usable with a finger or with a stylus. According to a preferred embodiment of the finger/stylus embodiment, the shapes can be input without lifting the finger or stylus from the sensitive surface until the shape is fully input. The shape can be for example a line (defined by its origin, its length, its direction - i.e. angle - and orientation...), a polygon, an ellipse, a continuous curve, etc.

According to a preferred embodiment, some shapes need to be input by establishing several concurrent contacts with the sensitive surface. This is possible with sensitive surfaces supporting a technology called "multi-touch". For example, a shape may consist of two segments, input respectively with the thumb and with the index finger. The sensitive surface is of course unable to know which finger was used to input the shape, but can distinguish a shape in which the two segments are input concurrently from a shape in which the two segments are input one after the other, even if the final shape is the same. This multiplies the number of combinations.

Similarly, the sensitive surface can detect the way in which the shape was input, for example it can detect whether a segment was input from left to right or from right to left, and can distinguish both inputs (even if the final shape is identical), authenticating only the one which corresponds to the shape recorded in the same way.

According to a preferred embodiment, the electronic device comprises a removable security token. The removable security token is responsible for storing the shape and comparing the inputted shape on behalf of the electronic device. The removable security token can be a smart card (such as a SIM card of an electronic device which consists of a mobile phone), a USB key, a TPM (trusted platform module), or any small secure electronic device. The use of a removable security token is advantageous because it can be protected against retrieval of the reference shape. A hacker could only send tentative shapes to the removable security token, and hope that the comparison would be positive, but could not retrieve the reference shape from the removable security token.

The invention also relates to a method to authenticate a user of an electronic device equipped with a sensitive surface usable to input a two dimensional shape. The method comprises an initial step during which the electronic device records a shape, and a subsequent authentication step during which a user attempts to authenticate by inputting a shape, and is authenticated if the inputted shape is the same shape as the recorded shape. The above variants and preferred embodiments described in relation to the electronic device apply to the method as well.

## Claims

1. An electronic device (MP) comprising a sensitive surface (TS) usable to input a two dimensional shape, **characterized in that** the electronic device (MP) is set to record a shape, and to authenticate a user if the user inputs the same shape as the recorded shape.

2. The electronic device (MP) according to claim 1, wherein the electronic device (MP) is set to record several shapes, and to authenticate a user if the user inputs the same shapes as the recorded shapes.

3. The electronic device (MP) according to claim 2, wherein the electronic device (MP) is set to authenticate the user only if he inputs the shapes in the same order as the order in which the shapes are recorded.

4. The electronic device (MP) according to any previous claim, wherein the shapes are simple geometric shapes.

5. The electronic device (MP) according to any previous claim, wherein the sensitive surface (TS) is a touchpad or a touchscreen.

6. The electronic device (MP) according to any previous claim, wherein the sensitive surface (TS) is usable with a finger or with a stylus.

7. The electronic device (MP) according to claim 6, wherein a shape is set to be input without lifting the finger or stylus from the sensitive surface (TS) until the shape is fully input.

8. The electronic device (MP) according to claim 6, wherein a shape is set to be input by establishing several concurrent contacts with the sensitive surface (TS).

9. The electronic device (MP) according to any previous claim, wherein the electronic device (MP) comprises a removable security token, and wherein the removable security token is responsible for storing the shape and comparing the inputted shape on behalf of the electronic device (MP).

10. A method to authenticate a user of an electronic device (MP) equipped with a sensitive surface (TS) usable to input a two dimensional shape, **characterized in that** it comprise an initial step during which the electronic device (MP) records a shape, and a subsequent authentication step during which a user attempts to authenticate by inputting a shape, and is authenticated if the inputted shape is the same shape as the recorded shape.
